# EUROPEAN PATENT APPLICATION

(11) **EP 0 576 119 A2**
(43) Date of publication of application: **29.12.1993**
(21) Application number: 93302834.2
(22) Date of filing: 13.04.1993
(51) Int. Cl.: G06F 15/20

(54) **System and method to process tabular data**

(30) Priority: 23.06.1992 GB 9213328
(71) Applicant: International Business Machines Corporation, Armonk, N.Y. 10504 (US)
(72) Inventor: Healey, Martin James Ronan, Winchester, Hampshire, SO22 6BN (GB)
(74) Representative: Burt, Roger James, Dr.

(57) **Abstract**

A system and method for translating free-form data tables to chart and graphs without requiring the intervention of the user to define the format or the characteristics of the tables.

The method consults a few key areas of the candidate table, compare them with a series of "master caricatures" of the main table layout types, and conclude that the candidate table is an example of the master table with which it has the highest correlation score. The number of table layout types can be very large and it can be increased as new types are encountered.

## Description

This invention relates to a system and method to process tabular data.

The requirement exists to generate charts (bar charts, line graphs etc) from tables of numbers. The tables may be typed into the computer, or they may already exist there, imbedded more or less casually in newspaper articles and reports. While casual, they will nevertheless usually have been entered reasonably carefully to allow readers to understand them without excessive mental effort.

The advantages of charts or other graphical representations of information are well known: analogue representations are easier to grasp, and may afford insights that would be missed in equivalent tabular representations.

Tables of course have their own advantages: they are easier to create on most computers than graphs, and they lend themselves to powerful computational operations, as exemplified by popular spreadsheet programs.

Tabular representations also score heavily in terms of computer storage requirements: a typical 'business' table comparing sales of 2 products at 5 1-year intervals might occupy 150 bytes, whereas in graphical form it may require 10,000 bytes because of the use of colours, shading patterns, complicated fonts and so on.

Problems arise at the point where these two types of representation meet, because human-created tables do not usually have a standard appearance, particularly when they were not created with the expectation of being 'understood' by a charting program. Thus the 'business' table mentioned previously might look like this:

| Years | BMW | Ford |
|---|---|---|
| 1988 | 44 | 67 |
| 1989 | 34 | 56 |
| 1990 | 46 | 60 |
| 1991 | 50.3 | 34 |
| 1992 | 53 | 59 |

Or this:

| | 1988 | 1989 | 1990 | 1991 | 1992 |
|---|---|---|---|---|---|
| BMW | 44 | 34 | 46 | 50.3 | 53 |
| Ford | 67 | 56 | 60 | 34 | 59 |

Or this:

| | | | | | |
|---|---|---|---|---|---|
| BMW | 44 | 34 | 46 | 50.3 | 53 |
| Ford | 67 | 56 | 60 | 34 | 59 |
| | 1988 | 1989 | 1990 | 1991 | 1992 |

Or this (apportioned by region rather than year):

| | South | North | West | East | Central |
|---|---|---|---|---|---|
| BMW | 44 | 34 | 46 | 50.3 | 53 |
| Ford | 67 | 56 | 60 | 34 | 59 |

And it may have errors like this:

| | | | | | | |
|---|---|---|---|---|---|---|
| BMW | 44 | 34 | 46 | 50.3 | 53 | |
| Ford | 67 | 56 | 6o | 34 | 59 | (o instead of 0) |
| | I988 | 1989 | 1990 | 1991 | 1992 | (I instead of 1) |

Many other variations are possible: separator lines and columns, missing values (which may be explicitly represented by dots or minus signs, or implicitly by blanks), labels omitted, number representations, currency symbols, 'M' for millions, negative values in parentheses etc.

The typical table below presents considerable difficulties for a computer to recognise:

| Yrs | Actual | Forecast |
|---|---|---|
| 1991 | | 65M |
| 1990 | | 53M |
| 1989 | | 45M |
| 1988 | 34.7M | 40M |
| 1987 | 29.2M | 33M |

Such recognition is nevertheless essential in using tabular data in computer applications.

The problem, then, is to allow the storage of information in a table form which is as unconstrained as possible, so that within reason anything which makes sense can be automatically translated to a good-quality graph. Any assistance from the user in the translation process has to be minimal.

'Assistance from the user' would involve a dialogue of some sort, probably using terms and concepts which might confuse the user, so the goal is to eliminate such dialogues and to deduce the semantics of the table as automatically as possible.

Charting packages tend to use terms like 'labels', 'datagroups', 'data sets', 'names', 'keys', 'legends', 'axis titles', 'dependent' and 'independent' axes etc, which can be an obstacle to occasional users and an irritation to all users.

Recognising and understanding hand-entered free-form tabular data by data processing systems is generally considered too unreliable to be worth attempting, because of the variety of possible layouts and the likelihood that the table will contain missing or invalid data.

Some spreadsheet programs will 'guess' the format, but only of a single row (Microsoft Excel for example). Lotus 1-2-3/G¹ will accept input from the Clipboard, but will only map it to separate cells when the Clipboard contains values in 1-2-3/G format - tabular information in ASCII form is always mapped to a single cell.
¹Lotus 1-2-3 is a trademark of Lotus Development Corporation

The IBM GDDM² Chart Utility provides for flexible import from a 'flat file', but requires the user to define the format in complete detail.
²IBM and GDDM are trademarks of International Business Machines Corporation

It is therefore an object of the present invention to overcome the above drawbacks of the prior art.

Accordingly the invention provides a data processing system operable to process free-form tabular data contained in a candidate table, said candidate table to be compared against one of a plurality of possible main table types, said system comprising:
means for storing a series of master caricatures which represent the main table types;
means for receiving the tabular data of said candidate table and masking out all but a predetermined set of data thereby discarding the data constituting a central portion of said candidate table;
means for determining the data types of the unmasked data elements and constructing a candidate table caricature therefrom;
means for comparing the candidate table caricature with a master caricature and calculating a score corresponding to the correlation therebetween.

According to another aspect of the invention there is provided a method to process free-form tabular data contained in a candidate table, said candidate table to be compared against one of a plurality of possible main table types, said system comprising the steps of:
storing a series of master caricatures which represent the main table types;
receiving the tabular data of said candidate table and mask out all but a predetermined set of data thereby discarding the data constituting a central portion of said candidate table;
determining the data types of the unmasked data elements and constructing a candidate table caricature therefrom;
comparing the candidate table caricature with a master caricature and calculating a score corresponding to the correlation therebetween.

In order that the invention may be more fully understood, a preferred embodiment thereof will now be described with reference to the accompanying drawings in which:
Figure 1 shows a schematic diagram of the system embodying the invention.
Figures 2a and 2b show examples of master caricatures according to the invention.
Figures 3 and 4 show schematically the processing of a candidate table according to the invention.
Figures 5a and 5b show a candidate table and an associated caricature representing the candidate table.
Figure 6a and 6b show the calculation of a correlation score between the candidate table caricature and each of the master caricatures.

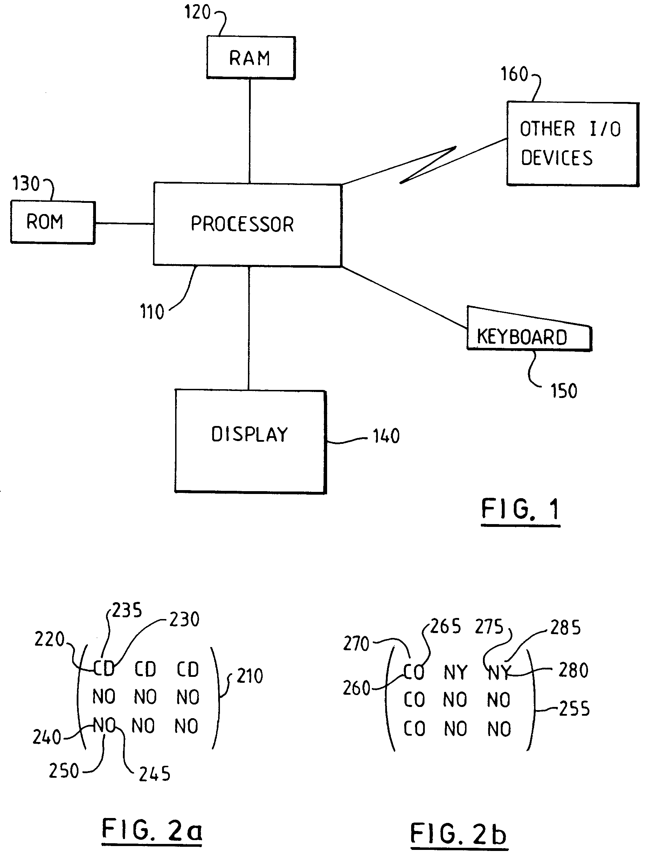

In Figure 1 the data processing system which embodies the invention is illustrated. It includes a processor 110, a RAM memory 120, a ROM memory 130, a display monitor 140 and a keyboard 150. Other I/O devices 160 are connected either directly or remotely to the processor 110.

The processor 110 may be a microprocessor such as is found in the IBM PS/2 Personal Computer³ or be a host processor connected to the other components through a data link.
Data currently being processed are stored in the RAM 120.
The control of the system is by program stored in the ROM 130.
Briefly the approach is as follows:
1. create a caricature representing the data types of several key areas of the candidate table, compare the candidate table caricature with a series of master caricatures representing the main table layout types,
2. determine which master caricature has the highest correlation score with the candidate table.

The number of table layout types is potentially very large and it is easy to add new types as they are encountered.
³IBM and PS/2 are trademarks of International Business Machines Corporation, Armonk, USA.

Tables with only one or two rows or columns can also be accommodated in this scheme, although in practice one would probably choose to treat single rows and columns as special cases. Having decided on a match, the candidate table's caricature can then be checked cell by cell against the chosen master caricature, and any 'erroneous' or empty cells can be dealt with as appropriate. Of course 'erroneous' cells may not be invalid at all: the problem may simply be that the candidate table's format does not conform to any in the set of master caricatures. The solution is to add the caricature to the master set.

The method does not guarantee that any conceivable table (with any conceivable defect) will be recognised, but it can be tuned to give very satisfactory results. Cases can be constructed which will never be recognised, but an assumption of the method is that the candidate tables were composed by people who actually wanted and expected their tables to be understood, subject to the occasional typographical error.

A master caricature is, in the preferred embodiment, a 3-by-3 matrix, corresponding to the first, inner and n'th elements in each dimension of the candidate table (where n is the extent of the corresponding dimension). It will be apparent to one skilled in the art that other elements of the tabular data may be selected to comprise a master template.

The 3-by-3 format is chosen because tables are usually more interesting near their edges; that is where labels, if any, will be found. Labels provide a significant insight into the meaning of the table. The labels may be recognisable as, or reasonably inferred to be, say, year numbers (1989 1990 etc), or month names and this helps in deciding which axis to fix as the X (or horizontal) axis in the chart in subsequent processing of the tabular data.

As mentioned, each master caricature consists of a 3-by-3 matrix of cells. Each cell contains a coded description representing one of a plurality of possible data types. The coding is structured so that matching can be graduated rather than binary: a 'missing' value, for example, may get a higher correlation score than a word of text, where a numeric value was anticipated. Similarly a 'year-number' may score reasonably highly in a context where a non-year-number was anticipated, the inference being that if relatively few values turn out to be 'year numbers' then they probably are not year numbers at all but are simply data values which happen to fall in the range 1900 to 2100.

A significant aspect of the invention is the ability to grow the set of master caricatures as experience of new table layouts is gained. A particular user may be mainly interested in current financial information, as opposed to, say, historical or scientific information, and will therefore require a set of master caricatures which expect financial information. In such a context tile value '3,009.6M' could be safely expected to be a representation of millions, rather than a typographical error.

Referring to figure 2a, there is shown an example of a 3x3 master caricature 210. The attributes of the cells of the master caricature represent the possible data types of a candidate table. The 'C' 220 in conjunction with the 'D' 230 of the first cell 235 can be interpreted as a 'Character string Date' thereby indicating that in a candidate table one may expect the top-left data element to have these data attributes. Similarly, the 'N' 240 in conjunction with the 'O' 245 of the last cell in the first column 250 can be interpreted as an 'Unqualified Number'. Consequently, the caricature 210 as a whole may represent a table having a first row comprising dates and remaining rows comprising unqualified numbers.

Referring to figure 2b, there is shown a further example of a 3x3 master caricature 255. The 'C' 260 and the 'O' of the first element of the first row 270 would have the same interpretations as above, videlicet, they represent a character string which is unqualified. The 'N' 275 and the 'Y' 280 of the last element of the first row 285 would be construed as representing a 'Number of a Year'. Consequently, the caricature 255 as a whole can be interpreted as representing a table having a first column comprising character labels, a first row, but for the first element, comprising years and the remainder of the table comprising unqualified numbers.

The coding scheme utilised by the embodiment of the invention described herein comprises seven codes as follows:
- 'NO' =: Unqualified numbers;
- 'NM' =: Numbers representing Monetary amounts;
- 'NY' =: Numbers representing Years;
- 'CT' =: Characters representing periods of Time (e.g. quarters, months);
- 'CM' =: Characters representing missing values;
- 'CD' =: Characters representing Dates; and
- 'CO' =: Unqualified Characters.

It will be apparent to one skilled in the art that notwithstanding the use of the above coding scheme in a particular embodiment of the invention, it may equally well have been implemented using some other coding scheme.

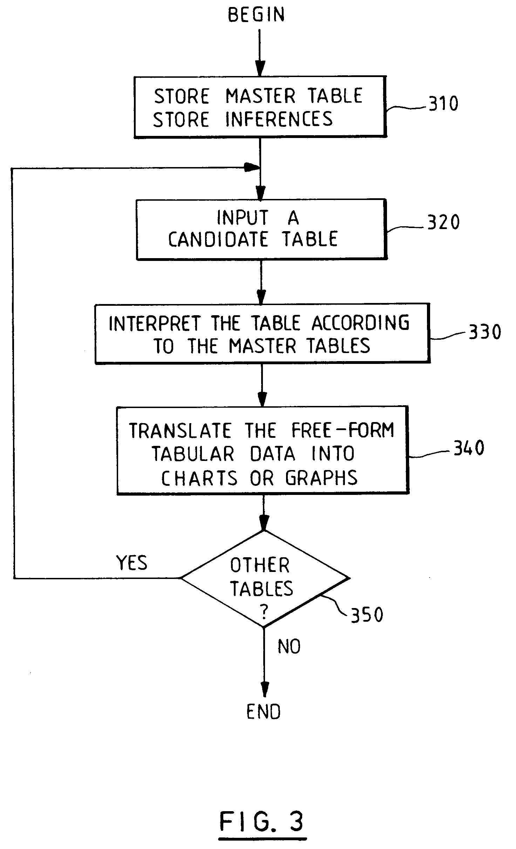

Figure 3 illustrates the processing of candidate tables according to the present invention. Step 310 shows that, before starting the analysis of the candidate tables, it is necessary to load in the memory 120 of the system a set of master caricatures with which to compare every candidate table. The tables are stored in two dimensional array data structures in the conventional manner. The number of these master caricatures is not fixed and can be incremented during the processing when a new type of table is encountered. Also the set of master caricatures can be varied to fit particular features which are expected to be encountered in the candidate tables. Together with the master tables a set of inferences is loaded in the memory 120 of the system.

Step 320 represents the input of a candidate table in the system; such an input can come from the keyboard 150 from other input devices 160 or can already being stored in the memory 120 of the system.

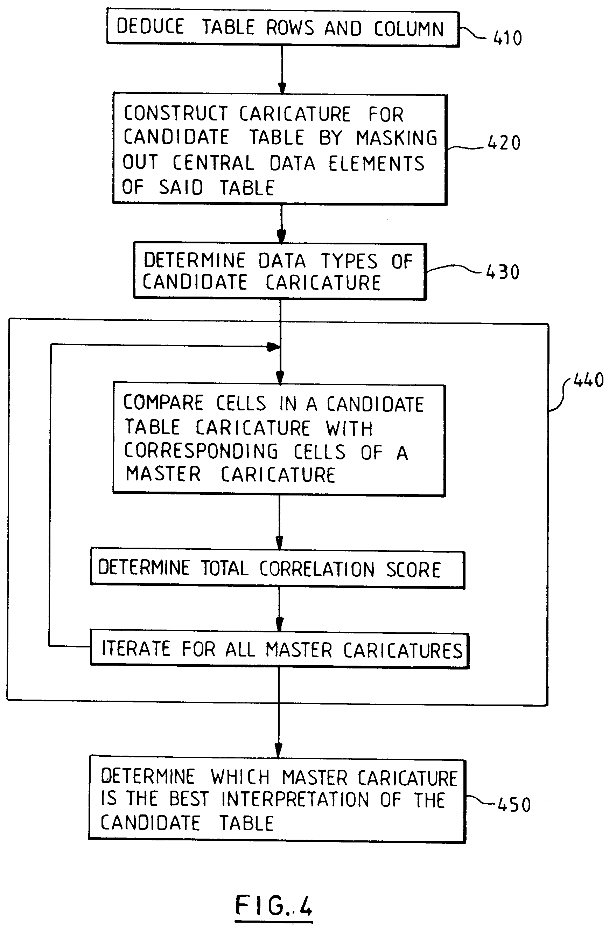

Step 330 relates to the recognition and interpretation of the candidate table according to the master tables and the inferences loaded in the step 1. This step will be described in more detail in the Figure 4.

In step 340 the free-form tabular data of the candidate table are translated according to the interpretation of step 330, into a graphical representation, and displayed on the monitor 140. If there are other candidate tables to be processed, then control returns to step 320 as exemplified by step 350.

Figure 4 illustrates the recognition and interpretation of the candidate tables.

The free-form table is parsed into its constituent cells (rows and columns) at 410 using the method described in the co-pending European patent application no. 87306029.7. If a clear column of blanks between two data columns does not exist, then each blank-delimited 'word' in each row must be regarded as a cell and any 'missing values' must be indicated explicitly (rather than being deduced, as they could be in the 'clear column of blanks' case).

In step 420, nine representative areas of the candidate table are determined by masking out all central data elements of the candidate table. The data elements of the representative areas are classified according to the above-mentioned coding scheme thereby forming a caricature representing the candidate table, as exemplified by step 430.

Every cell in a master caricature is compared with the corresponding cell of the candidate table caricature and a score is determined according to closeness of match of attributes at 440. All individual scores are utilised to calculate an overall correlation score representing the similarity between the master caricature and the candidate table caricature. This is repeated for all the caricatures previously loaded in the memory 120 of the system.

The master caricature which has the highest correlation score is determined at 450. It is this caricature which has the best interpretation of the candidate table.

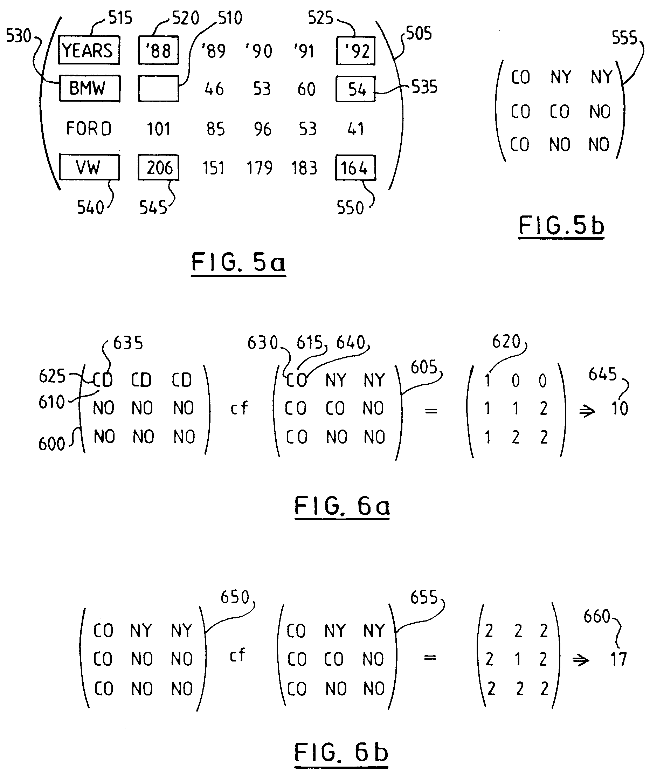

Referring to figure 5a, there is shown a candidate table 505 comprising information relating to annual car sales of various types of car for the years 1988 to 1992 inclusive. It will be noted that data for the number of BMWs sold during 1988 is unavailable. This erroneous or empty cell 510 will be assigned a space character and interpreted accordingly. It can be seen that the representative areas have been identified, 515-550. The data elements within the representative areas are classified to form a caricature 555 representing the candidate table, as shown in figure 5b.

Referring to figure 6a there is shown the comparison of a master caricature 600 the with caricature 605 representing the candidate table. Each element of the master caricature table is compared to the corresponding element of the candidate table caricature to determine a score representing the similarity therebetween. For example, comparing the first elements of the first rows of each table 610, 615 would yield a score of one 620, owing to the attributes matching in the first characters 625, 630, where each has a 'C' thereby giving a one, and differing in the second characters 635, 640, giving a score of zero. A total score for the comparison is calculated by summing the scores for the individual elements thereby giving an indication of the correlation between the two caricatures. It can be seen that the correlation score for the given master caricature is ten 645.

Similarly, referring to figure 6b, there is shown another comparison of a master caricature 650 and the candidate table master caricature 655. It can be seen from the final correlation score of seventeen 660 that the master caricature more closely resembles the candidate table caricature.

Consequently, any subsequent processing of the table would be performed according to the master caricature having the greatest correlation score. In the examples above the candidate table would have been identified as having a first column comprising character strings, a first row, but for the first element, comprising years and the remainder of the table comprising unqualified numbers from which, say, the labels of the axes of a graph or bar chart could be deduced and displayed.

## Claims

1. Data processing system operable to process free-form tabular data contained in a candidate table, said candidate table to be compared against one of a plurality of possible main table types, said system comprising:
means for storing a series of master caricatures which represent the main table types;
means for receiving the tabular data of said candidate table and masking out all but a predetermined set of data thereby discarding the data constituting a central portion of said candidate table;
means for determining the data types of the unmasked data elements and constructing a candidate table caricature therefrom;
means for comparing the candidate table caricature with a master caricature and calculating a score corresponding to the correlation therebetween."

2. A system as claimed in claim 1 wherein a master caricature is a matrix.

3. A system as claimed in any preceding claim further comprising means for repeating said comparison and correlation score calculation for all master caricatures within the series of master caricatures.

4. A system as claimed in any preceding claim further comprising means to identify which master caricature has the highest correlation score with the candidate table.

5. A system as claimed in any preceding claim further comprising means to process said free-form tabular data according to said identified master caricature including means to translate said free-form tabular data into charts.

6. A system as claimed in any preceding claim further comprising means to process said free-form tabular data according to said identified master caricature including means to translate said free-form tabular data into graphs.

7. A system as claimed in any preceding claim further comprising means to add new master caricatures to said series of master caricatures.

8. A method to process free-form tabular data contained in a candidate table, said candidate table to be compared against one of a plurality of possible main table types, said system comprising the steps of:
storing a series of master caricatures which represent the main table types;
receiving the tabular data of said candidate table and mask out all but a predetermined set of data thereby discarding the data constituting a central portion of said candidate table;
determining the data types of the unmasked data element and constructing a candidate table caricature therefrom;
comparing the candidate table caricature with a master caricature and calculating a score corresponding to the correlation therebetween."

9. A method as claimed in claim 8 wherein a master caricature is a matrix.

10. A method as claimed in either of claims 8 or 9 further comprising the step of repeating said comparison and correlation score calculation for all master caricatures within the series of master caricatures.

11. A method as claimed in any of claims 8, 9 or 10 further comprising the step of identifying which master caricature has the highest correlation score with the candidate table.

12. A method as claimed in any of claims 8, 9, 10 or 11 further comprising the step of processing said free-form tabular data according to said identified master caricature including means to translate said free-form tabular data into charts.

13. A method as claimed in any of claims 8, 9, 10, 11 or 12 further comprising the step of processing said free-form tabular data according to said identified master caricature including means to translate said free-form tabular data into graphs.

14. A method as claimed in any of claims 8, 9, 10, 11, 12 or 13 further comprising the step of adding new master caricatures to said series of master caricatures.
